# EUROPEAN PATENT APPLICATION

(11) **EP 2 590 084 A1**
(43) Date of publication of application: **08.05.2013**
(21) Application number: 11800800.2
(22) Date of filing: 27.06.2011
(51) Int. Cl.: G06F 13/10

(54) **METHOD OF DATA TRANSMISSION AND DATA TRANSMISSION SYSTEM**

(30) Priority: 30.06.2010 JP 2010150228
(71) Applicant: Optoelectronics Co., Ltd., Warabi-shi, Saitama 335-0002 (JP)
(72) Inventor: LIU Shiping, Warabi-shi Saitama 335-0002 (JP)
(74) Representative: Ealey, Douglas Ralph
(86) International application number: PCT/JP2011/064712
(87) International publication number: WO 2012/002336

(57) **Abstract**

To allow a code scanner to be set by sending a menu command from PC to a code scanner using an interface of USB-HID.

HID host and the code scanner are connected to each other through an interface of USB-HID. On the assumption of this, the HID host creates send data D3 based on plural pieces of status information (information containing ON or OFF status of Caps Lock, Num Lock and Scroll Lock) and sends the created send data D3 to the code scanner. This enables the code scanner to receive various kinds of setting by the send data D3 which is sent from the HID host even if the interface is USB-HID.

## Description

### TECHNICAL FIELD

The present invention relates to a data-sending method and a data-sending system in which a host and an input device are connected to each other through a USB-HID interface and status information indicating a status of the host is sent from the host to the input device.

### BACKGROUND ART

For a code scanner that reads a code symbol such as a bar code and a two-dimensional code, a menu for performing various kinds of setting on the code scanner has been generally prepared. On this menu, for example, setting for reading only special code, setting for checking operation of the code scanner and the like have been described.

In order to allow the code scanner to carry out the setting described on the menu, two ways therefor exist. One is a way for performing the setting by reading a code symbol called as "menu codes" with the code scanner. These menu codes are previously prepared by code scanner makers by only number of the settings (for example, approximately several hundreds kinds thereof) of the code scanners. When desiring to perform any settings other than the prepared menu codes, it is possible to create a new menu code by inputting any characters by means of a keyboard or the like connected to a personal computer (hereinafter, referred to as "PC").

The other way is a way for sending a menu command to the code scanner from PC through an interface. The menu command is referred to as a character string which has been previously prescribed to perform the setting described in the menu. For example, there is a command such as [ESC]JG as the menu command and when pushing down keys, [ESC], J and G of the keyboard in order, this character string (menu code) is sent to the code scanner, so that setting, "read only JAN code" is fixed in the code scanner.

By the way, as the interface through which any data communication is performed between PC and an input device such as a keyboard or a mouse when the PC is connected to the input device, there are generally an interface of a two-way communication type such as RS232C and Universal Serial Bus-Communication (USB-COM), an interface of a one-way communication type such as Keyboard wedge and Universal Serial Bus-Human Interface Device (USB-HID) and the like (see, for example, Patent Document 1). The code scanner is also capable of using, similar to the above-mentioned input device, the interfaces such as RS232C, USB-COM, Keyboard wedge, USB-HID and the like (see, for example, Patent Document 2). Nowadays, USB-HIDS are particularly used as the interfaces, so that various kinds of communication methods therefor are conceived (see, for example, Patent Document 3).

### PRIOR ART DOCUMENTS

### PATENT DOCUMENTS

Patent Document 1: Japanese Patent Application Publication No. 2005-275957
Patent Document 2: Japanese Patent Application Publication No. 2008-40955
Patent Document 3: Japanese Patent Application Publication No. H11-194988

### SUMMARY OF THE INVENTION

### THE PROBLEM TO BE SOLVED BY THE INVENTION

When reading the above-mentioned menu codes by the code scanner to set the code scanner, a user has to do any complicated works to search a desired menu code from several hundreds kinds of the menu codes. Further, as one of the settings of the code scanner, there is a setting of reading only a code symbol formed by paints that are luminous when irradiating ultraviolet rays thereto. When fixing the code scanner to such a setting, it is difficult to return this setting to a setting for reading any normal code symbols because general menu codes are code symbols formed by white and black lines. (Although the code symbols by which the setting is returned to the setting for reading the normal code symbols may be formed by paints that are luminous when irradiating ultraviolet rays thereto, a printer or the like for implementing this must be prepared.)

Although in RS232C and USB-COM of the two-way communication type, a menu command may be sent from the PC to the code scanner, only any data sending from the code scanner to the PC is performed in USB-HID of one-way type but there is no data-sending method from the PC to the code scanner. As described above, USB-HID has been used as many interfaces in recent years so that it is hoped that any data is sent from the PC to the code scanner through an interface of USB-HID.

Accordingly, the present invention has an object to provide a data-sending method and a data-sending system in which any data (for example, menu command or the like) can be sent from the PC to the code scanner using the interface of USB-HID of one-way interface and the code scanner can be set based on the sent data.

### MEANS FOR SOLVING THE PROBLEM

In order to solve the above-mentioned problem, a data-sending method according to the present invention is a data-sending method in which status information indicating a status of a host is sent from the host to an input device, characterized in that the host creates send data based on plural pieces of the status information and sends to the input device the created send data.

In the data-sending method according to the present invention, the status information indicating a status of the host is sent from the host to the input device. For example, the status information is referred to as information containing ON or OFF status of Caps Lock, Num Lock and Scroll Lock. Further, the host and the input device are connected to each other through an interface of USB-HID. On the assumption of this, the host creates the send data based on plural pieces of status information and sends the created send data to the input device. This enables the input device to receive various kinds of setting by the send data which is sent from the host even if the interface is USB-HID.

Further, a data-sending system according to the invention is a data-sending system in which status information indicating a status of a host is sent from the host to an input device, characterized in that the host creates send data based on plural pieces of the status information and sends to the input device the created send data.

### EFFECT OF THE INVENTION

By the data-sending method and the data-sending system according to the invention, any menu codes for setting a code scanner become unnecessary when the code scanner is used as the input device. As a result thereof, any complicated works to set the code scanner by reading the menu codes may be cut.

### BRIEF DESCRIPTION OF THE DRAWINGS

[FIG. 1] is a block diagram showing a connection example of HID host 20 and any of USB devices 30.
[FIG. 2] is a sequence diagram showing an operation example of the HID host 20.
[FIG. 3] is a diagram showing a configuration example of status information D2.
[FIG. 4] is a timing chart showing a sending example of send data D3 according to a first embodiment.
[FIG. 5] is a diagram showing a setting example of menu commands according to a second embodiment.
[FIG. 6A] is a diagram showing a configuration example of a send packet D4.
[FIG. 6B] is a diagram showing a configuration example of the send packet D4.
[FIG. 6C] is a diagram showing a configuration example of the send packet D4.

### BEST MODE FOR CARRYING OUT THE INVENTION

### [Connection Example of USB Host 20 and USB Devices 30]

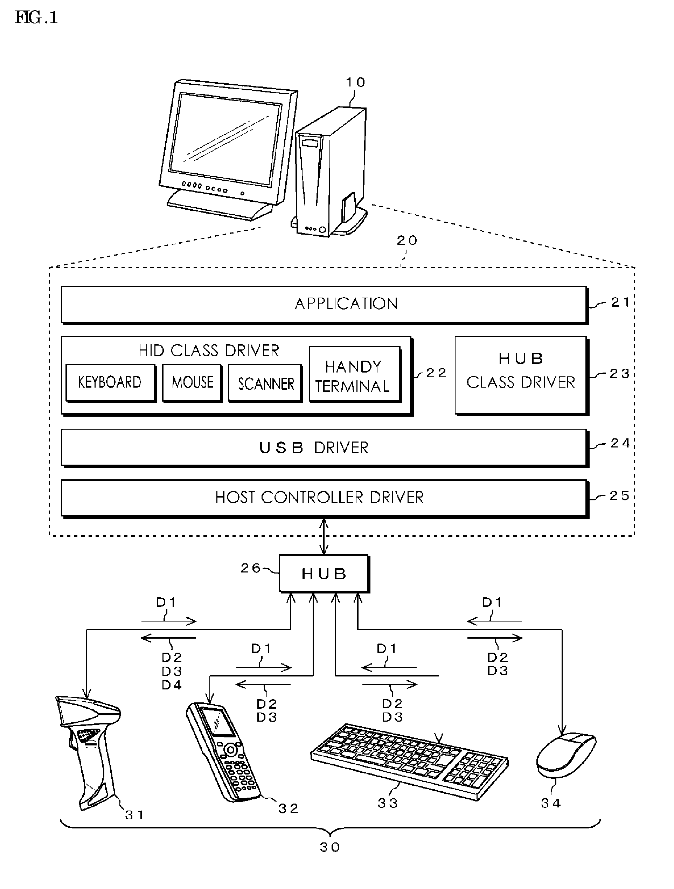

First, the following will describe a configuration example of the HID host 20 that is a typical configuration of USB-HID.
As shown in FIG. 1, in a personal computer (hereinafter, referred to as "PC 10"), USB-HID host (hereinafter, referred to as "HID host 20") is loaded, and it is connected to each of the USB devices 30 which are input devices through HUB 26 and they configure a data-sending system of this invention.

The HID host 20 is composed of layers such as an application 21, HID class driver 22 and HUB class driver 23, which are class drivers, USB driver 24 and host controller driver 25.

The application 21 is an application software layer utilizing the USB devices 30. The application software is software directly having a function on which a user of PC 10 performs an operation to be carried out on the PC 10.

The HID class driver 22 and the HUB class driver 23 are driver layers for administrating end points and/or processing a communication protocol, which correspond to a class of each of the USB devices 30 connected to the PC 10.

The USB driver 24 is a driver layer which performs any fundamental operations as USB and is in charge of USB theory communication control process that is apart from a controller or a class. The USB driver 24 is also provided with administration function on connection and/or transfer of the USB devices 30. Specifically, the USB driver 24 administrates USB address of each of the USB devices 30 and monitors a status of an end point of each of the USB devices 30. The USB driver 24 also presents any kinds of necessary processing under this monitoring in a case where a connection status of the USB devices 30 alters.

The host controller driver 25 is a driver layer for a host controller realized by hardware (chip) and abstracting the hardware from the higher USB driver 24. For example, the host controller driver 25 performs I/O processing and interrupt processing to the controller and scheduling processing that is dependent on the controller.

The USB devices 30 are composed of, for example, a code scanner 31, a handy terminal 32, a keyboard 33, a mouse 34 or the like. They all have a USB-HID interface.

The code scanner 31 is a device for optically reading a code symbol such as a barcode, two-dimensional code or the like. When reading the code symbol, the code scanner 31 performs photoelectric conversion on the read code symbol to send it to the HID host 20 through the HUB 26 as input data D1.

The handy terminal 32 may communicate a desired server and is a terminal device which a user can carry to be used for, for example, any stock management or the like. The handy terminal 32 sends the input data D1 the user inputs to the HID host 20 through the HUB 26.

The keyboard 33 has a plurality of keys (for example, alphabet keys, ESC key, ENTER key, Caps Lock key, Num Lock key and Scroll Lock key) and inputs a desired character by pushing down any of these keys. When the user pushes down a key, the keyboard 33 sends the input data D1 containing character information which corresponds to the pushed-down character to the HID host 20 through the HUB 26.

The mouse 34 is a pointing device for detecting, when the user moves it horizontally, the movement thereof by a sensor utilizing a ball, LED or laser and the like and for inputting two-dimensional moved distance to the computer. The mouse 34 sends information containing the moved distance as the input data D1 to the HID host 20 through the HUB 26.

### [Data-Sending Example from Any of USB Devices 30 to HID Host 20]

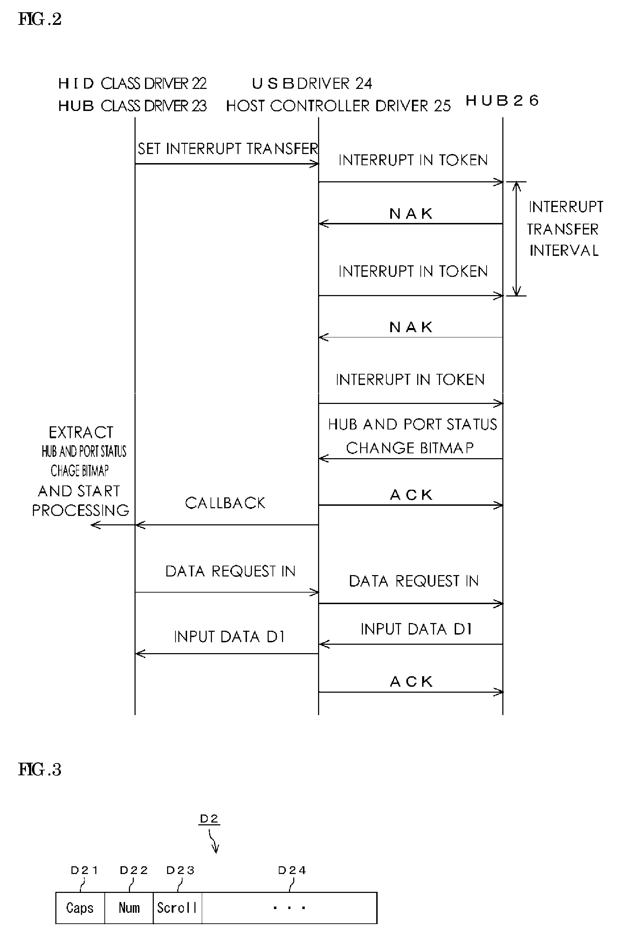

Next, the following will describe an interrupt transfer which is an example of sending data from any of USB devices 30 to the HID host 20. As shown in FIG. 2, the HID class driver 22 or the HUB class driver 23 sets the interrupt transfer in the USB driver 24 and the host controller driver 25.

When setting the interrupt transfer, the USB driver 24 and the host controller driver 25 sets so that Interrupt In Token (a request for interrupt transfer) is thrown to the HUB 26 periodically. Thus, it is possible to set them so as to call back any specified function when the interrupt transfer leads to a result (such as ACK or an error) other than NAK.

The HUB 26 is always monitored by the HID host 20 until any USB devices are separated from the connection thereof. Each time the HUB 26 receives the Interrupt In Token, it sends back NAK as an end point unless the HUB 26 alters. The interval between the first Interrupt In Token and the next Interrupt In Token is referred to as "interrupt transfer interval".

The HUB 26 sends back Hub and Port Status Change Bitmap to the USB driver 24 and the host controller driver 25 as an end point in place of NAK when the status of any of USB devices 30 alters, for example, when it is detected that any of USB devices 30 is detached from the HUB 26.

The USB driver 24 and the host controller driver 25, which receive the Hub and Port Status Change Bitmap, send back ACK to the HUB 26. The USB driver 24 and the host controller driver 25 also perform callback to the HID class driver 22 or the HUB class driver 23 to extract the Hub and Port Status Change Bitmap. The HID class driver 22 or the HUB class driver 23 outputs the extracted Hub and Port Status Change Bitmap to the application 21 where various kinds of processing are carried out.

While the application 21 carries out various kinds of processing, the data is requested from the HID class driver 22 or the HUB class driver 23 to the USB driver 24 and the host controller driver 25 and then, the input data D1 is sent from any of the USB devices 30 to the HUB class driver 23 through the HUB 26, the host controller driver 25 and the USB driver 24. In this moment, ACK is sent back from the USB driver 24 and the host controller driver 25 to the HUB 26.

Thus, the input data D1 is sent from any of USB devices 30 to the HID host 20 (the PC 10). In an interface of USB-HID, however, it is impossible to send data from the PC 10 to any of the USB devices 30. Accordingly, the following will describe a data-sending method according to the invention in which based on status information D2 output from the HID class driver 22, the data is sent from the HID host 20 to any of the USB devices 30.

### Embodiment 1

### [Sending Example of Status Information D2 from HID Host 20 to Any of USB Devices 30]

The following will describe the status information D2 output from the HID class driver 22 as a first embodiment. As shown in FIG. 3, the status information D2 is information including ON or OFF status of Caps Lock, Num Lock and Scroll Lock and is configured to have a Caps Lock bit D21, a Num Lock bit D22, a Scroll Lock bit D23 and nul bits D24. The Caps Lock bit D21, the Num Lock bit D22 and the Scroll Lock bit D23 are respectively composed of one bit and the nul bits D24 are composed of 5 bits. Namely, the status information D2 is composed of 8 bits (= 1 byte).

The Caps Lock bit D21 is configured so that each time the Caps Lock key of the keyboard 33 is pushed down, it is changed to [1] or [0]. Namely, ON or OFF status (available/unavailable state) of Caps Lock is switched. The Caps Lock is generally a function for allowing an alphabet input by the keyboard 33 to be changed from its small letter to its large letter under the ON status thereof.

The Num Lock bit D22 is configured so that each time the Num Lock key of the keyboard 33 is pushed down, it is changed to [1] or [0] and ON or OFF status of Num Lock is switched. The Num Lock is generally a function for allowing a numeral input by a numeric keypad the keyboard 33 has under the ON status thereof or a cursor input (arrows, Home, End and the like) by the numeric key pad under the OFF status thereof.

The Scroll Lock bit D23 is configured so that each time the Scroll Lock key of the keyboard 33 is pushed down, it is changed to [1] or [0] and ON or OFF status of Scroll Lock is switched. The Scroll Lock is generally a function for allowing any scroll in a screen to be locked under the ON status thereof. The nul bits D24 are always zero.

Such status information D2 is created by the HID class driver 22 and is output to the USB devices 30 by a token of SETUP, not shown, through the HUB 26. The USB devices 30 receive the status information D2 output from the HID class driver 22 so that they can understand a status of any other USB devices through the HID host 20. The status information D2 is output from the HID class driver 22 to the USB devices 30 when turning the PC 10 on or pushing down any of the Caps Lock key, the Num Lock key and the Scroll Lock key.

### [Sending Example of Send Data D3 from HID Host 20 to Any of USB Devices 30]

This invention has been found out by focusing on the status information D2 which can be sent from the HID Host 20 to any of the USB Devices 30. The following will describe a specific data-sending method.

The HID host 20 creates the send data D3 based on plural pieces of the status information D2 and sends the created send data D3 to any of the USB devices 30 through the HUB 26, as shown in FIG. 1.

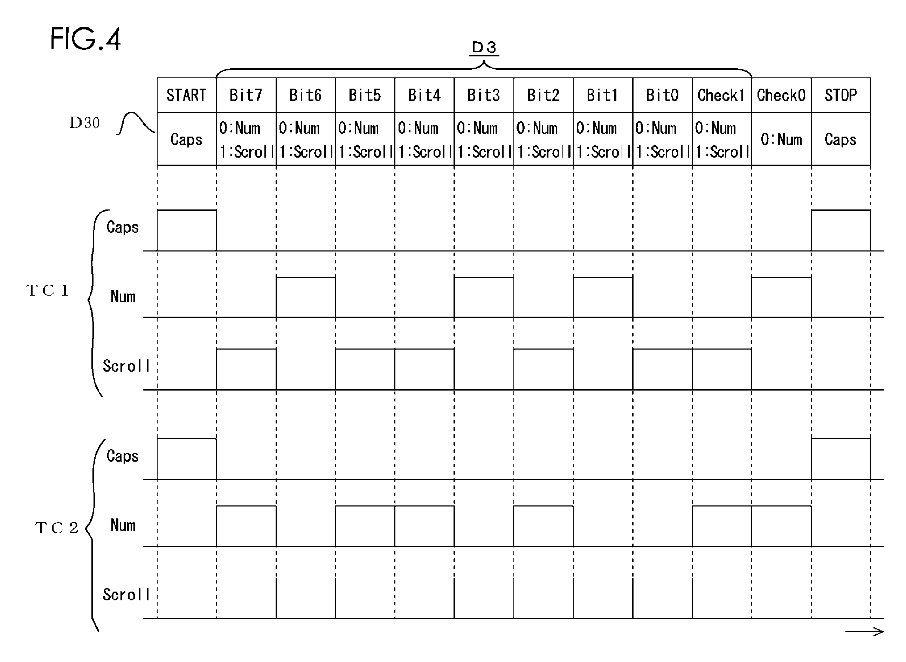

As shown in the data structure D30 of FIG. 4, the send data D3 is composed of a set of Bit7 through Bit0, for example. Every bit of the send data D3 contains the status information D2.

In the set of Bit7 through Bit0, information of 8 bits (1 byte) to be input to any of the USB devices 30 is contained. The set of Bit7 through Bit0 is configured so that the Num Lock bit D22 or the Scroll Lock bit D23 is one. For example, if value [0] is entered into any of the set of Bit7 through Bit0, the Num Lock bit D22 is set to one. In other words, the Num Lock key of the keyboard 33 is pushed down. Alternatively, if value [1] is entered into any of the set of Bit7 through Bit0, the Scroll Lock bit D23 is set to one. In other words, the Scroll Lock key of the keyboard 33 is pushed down.

Thus, the send data D3 is created by a combination of ON or OFF status of Caps Lock, Num Lock and Scroll Lock. Specifically, it is created by pushing down the Caps Lock key, the Num Lock key and the Scroll Lock key in the keyboard 33 at a predetermined interval and in predetermined order as a telegram created by the Morse code. The predetermined interval and the predetermined order are not limited to this embodiment and can be suitably changed.

When sending the send data D3 composed of the above-mentioned set of Bit7 through Bit0 to any of the USB devices 30, the Caps Lock key of the keyboard 33 is first pushed down one time, which triggers a start of any sending operations of the send data D3.

Corresponding to the set of Bit7 through Bit0, the Num Lock key or the Scroll Lock key is pushed down to create the send data D3.

Value [0] or [1] is then input in Check1 bit. In Check1 bit, even parity is used. When numbers of value [0] or [1] input in the set of Bit7 through Bit0 are an odd number, value [1] is input thereinto or when they are an even number, value [0] is input thereinto. A specific example thereof will be described later. After the Check1 bit has been input, value [0] is always input into Check0 bit.

After value [0] has been input into the Check0 bit, the Caps Lock key of the keyboard 33 is pushed down one time to finish sending the send data D3.

Next, the following will describe the sending of the send data from the HID host 20 to any of the USB devices 30. A timing chart TC1 shown in FIG. 4 is a diagram for sending the send data D3 including information of a set of [10110101]. In a case where the send data D3 is sent from the HID host 20 to any of the USB devices 30, the Caps Lock key of the keyboard 33 is first pushed down to input value [1] into a START bit. The HID host 20 then prepares to create the send data D3.

Thereafter, in order to input value [1] into Bit7, the Scroll Lock key of the keyboard 33 is pushed down. In order to input value [0] into Bit6, the Num Lock key of the keyboard 33 is pushed down. In order to input value [1] into Bit5, the Scroll Lock key of the keyboard 33 is pushed down. In order to input value [1] into Bit4, the Scroll Lock key of the keyboard 33 is pushed down. In order to input value [0] into Bit3, the Num Lock key of the keyboard 33 is pushed down. In order to input value [1] into Bit2, the Scroll Lock key of the keyboard 33 is pushed down. In order to input value [0] into Bit1, the Num Lock key of the keyboard 33 is pushed down. In order to input value [1] into Bit0, the Scroll Lock key of the keyboard 33 is pushed down.

Since the set of Bit7 through Bit0 into which [10110101] are input has the numbers of [0] of three and the numbers of [1] of five and both of the numbers of [0] and [1] are odd numbers, value [1] is input into the Check1 bit. In the other words, the Scroll Lock key of the keyboard 33 is pushed down. In order to input value [0] into the Check0 bit, the Num Lock key of the keyboard 33 is then pushed down.

Inputting value [1] into the Check1 bit when the number of value [0] or [1] is odd number is because the status of the Scroll Lock returns to a normal status (OFF status). Namely, since the Scroll Lock key, the Num Lock key and the Scroll Lock key of the keyboard 33 are normally used when inputting a character, they become ON status when they are pushed down odd number of times, so that input status of the keyboard 33 is changed. For example, when the Scroll Lock key is pushed down odd number of times, the status of the Scroll Lock becomes ON status so that the scroll in the screen is fixed. When it is pushed down even number of times, the status of the Scroll Lock becomes OFF status so that the fixation of scroll in the screen is released.

Inputting value [0] into the Check0 bit without exception is because the status of the Num Lock returns to a normal status (OFF status) thereof. Namely, since the Num Lock key of the keyboard 33 is pushed down odd number of times when the number of [0] or [1] in the set of Bit7 through Bit0 is odd number so that the Num Lock becomes ON status, the Num Lock returns to OFF status by pushing down the Num Lock key one time when inputting it into Check0 bit. Further, since value [0] is input into the Check1 bit when the number of value [0] or [1] in the set of Bit7 through Bi0 is even number, the Num Lock key is pushed down odd number of times until the set of Bit7 through Bi0 and Check1 bit is input so that the Num Lock becomes ON status. Accordingly, by pushing down the Num Lock key one time when inputting it into Check0 bit, the Num Lock returns to OFF status thereof.

When inputting them into the Check1 bit and Check0 bit, the Caps Lock key of the keyboard 33 is finally pushed down to input value [1] into STOP bit. Thus, the HID host 20 creates the send data D3 including information of [10110101] and sends the created send data D3 to any of the USB devices 30.

By the way, when sending the send data D3 to any of the USB devices 30, a period of time (delayed time) when pushing down any of the Caps Lock key, the Num Lock key and the Scroll Lock key of the keyboard 33 is set to be, for example, five seconds. If the period of time when pushing down any of the keys is longer than five seconds, it is estimated to be a timeout. Accordingly, the lowest sending speed of the send data D3 is 0.2 bps. Further, when sending plural items of the send data D3 to any of the USB devices 30, an interval between the items of the send data D3 is not specifically limited.

Next, the following will describe an example where the HID host 20 sends the send data D3 in which information of [01001011] is included to any of the USB devices 30. A timing chart TC2 shown in FIG. 4 is a diagram for sending the send data D3 including information of [01001011]. In a case where the send data D3 is sent from the HID host 20 to any of the USB devices 30, the Caps Lock key of the keyboard 33 is first pushed down to input value [1] into a START bit. The HID host 20 then prepares to create the send data D3.

Thereafter, in order to input value [0] into Bit7, the Num Lock key of the keyboard 33 is pushed down. In order to input value [1] into Bit6, the Scroll Lock key of the keyboard 33 is pushed down. In order to input value [0] into Bit5, the Num Lock key of the keyboard 33 is pushed down. In order to input value [0] into Bit4, the Num Lock key of the keyboard 33 is pushed down. In order to input value [1] into Bit3, the scroll Lock key of the keyboard 33 is pushed down. In order to input value [0] into Bit2, the Num Lock key of the keyboard 33 is pushed down. In order to input value [1] into Bit1, the Scroll Lock key of the keyboard 33 is pushed down. In order to input value [1] into Bit0, the Scroll Lock key of the keyboard 33 is pushed down.

Since the set of Bit7 through Bit0 into which [01001011] is input has the numbers of [0] of four and the numbers of [1] of four and both of the numbers of values [0] and [1] are even numbers, value [0] is input into the Check1 bit. In the other words, the Num Lock key of the keyboard 33 is pushed down. In order to input value [0] into the Check0 bit, the Num Lock key of the keyboard 33 is pushed down.

When inputting them into the Check1 bit and Check0 bit, the Caps Lock key of the keyboard 33 is finally pushed down to input value [1] into STOP bit. Thus, the HID host 20 creates the send data D3 in which information of [01001011] is included and sends the created send data D3 to any of the USB devices 30.

Thus, by the data-sending method according to the first embodiment, the status information D2 indicating a status of the HID host 20 is sent from the HID host 20 to any of the USB devices 30. For example, the status information D2 is information including ON or OFF status of Caps Lock, Num Lock and Scroll Lock. The HID host 20 and any of the USB devices 30 are connected to each other through an interface of USB-HID. On the assumption of this, the HID host 20 creates the send data D3 based on plural items of the status information D2 and sends the created send data D3 to any of the USB devices 30. This enables the USB devices 30 to receive various kinds of settings by the send data D3 sent from the HID host 20 even if the interface is USB-HID.

Accordingly, when the USB device 30 is the code scanner 31, any menu code for setting the code scanner 31 becomes unnecessary. As the result thereof, it is possible to delete any complicated works such that a menu code is read and the code scanner 31 is set. Further, since the two-way data sending is performed between the HID host 20 and each of the USB devices 30 using USB-HID, a data transfer speed is improved as compared with a data-sending method and a data-sending system using a conventional interface such as RS232S or the like so that it is possible to perform a large quantity of data transfer.

It is to be noted that it has described in this embodiment that although, in FIG. 4, when inputting value [1] into the START bit and the STOP bit, the Caps Lock key has been pushed down; when inputting value [0] into the set of Bit7 through Bit0, Check1 bit and Check0 bit, the Num Lock key has been pushed down; and when inputting value [1] into the set of Bit7 through Bit0 and Check1 bit, the Scroll Lock key has been pushed down, this invention is not limited thereto: Assignment of the Caps Lock key, the Num Lock key and the Scroll Lock key may be changed.

### Embodiment 2

In this embodiment, the following will describe a data-sending method of sending a send packet D4 gathering plural items of the send data D3 including information of one byte, which has been described in the first embodiment, to the code scanner 31. Terms and codes that are identical to those of the first embodiment have the same functions, so that an explanation thereof will be omitted.

The send packet D4 which will be described in this embodiment is a collection of items of the send data D3 and the send packet D4 contains a menu command for setting the code scanner 31. The menu command is a command for carrying out any setting described in a menu previously created by a code scanner maker and is composed of a predetermined string.

The menu command is sent from the keyboard 33 toward the HID host 20 when an [ESC] key of the keyboard 33 becomes a trigger of inputting a character and a desired character is pushed down or desired characters are pushed down after this [ESC] key has been pushed down. The HID host 20 then creates the send packet D4 in which the menu command is included and sends the created send packet D4 to the code scanner 31.

### [Set Example of Menu Command]

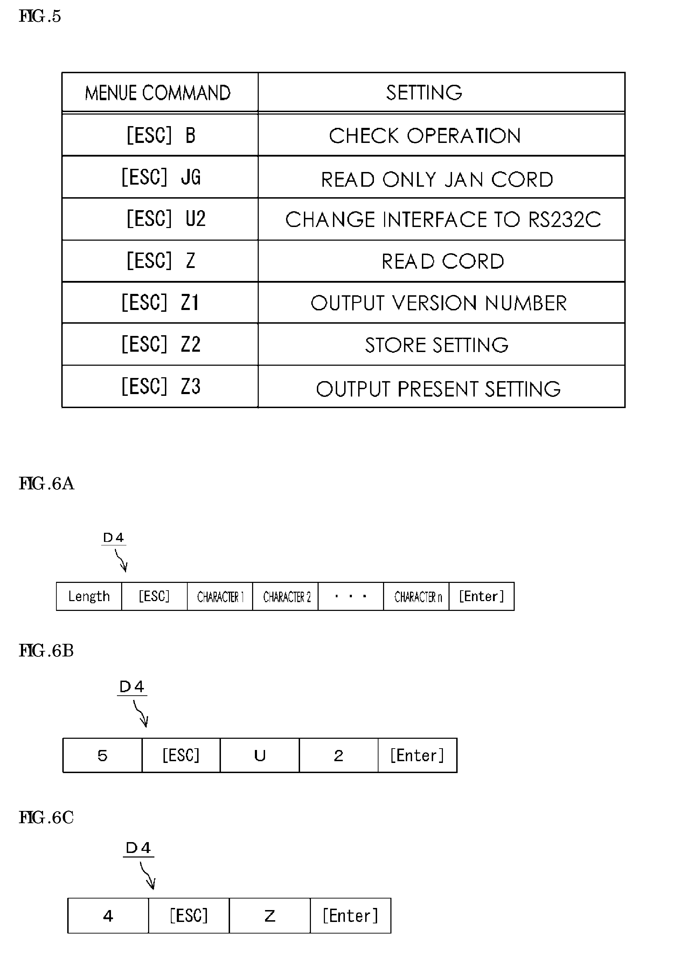

An example of the menu commands is shown in FIG. 5. The menu command of [ESC]B is a command for checking an operation of the code scanner 31. The menu command of [ESC]JG is a command for allowing the code scanner 31 to read only JAN code. The menu command of [ESC]U2 is a command for changing an interface of the code scanner 31 to RS232C.

The menu command of [ESC]Z is a command for allowing the code scanner 31 to read a code. The code scanner 31 starts a code-reading operation just after this menu command has been input. The menu command of [ESC] Z1 is a command for outputting a version number stored on a storage portion composed of RAM and ROM, not shown, and the like in the PC 10 or the code scanner 31. This version number may be a version number of a main body of the code scanner 31 or may be a version number of software installed in the code scanner 31.

The menu command of [ESC] Z2 is a command for storing a present setting of the code scanner 31 on the storing portion. For example, when inputting the menu command of [ESC] Z2 after the menu command of [ESC]JG has been input, the code scanner 31 stores setting of reading only JAN code on the storage portion. The menu command of [ESC] Z3 is a command for outputting the present setting of the code scanner 31. In the other words, the setting stored on the storage portion of the code scanner 31 by inputting the menu command of [ESC] Z2 is output to the PC 10 through, for example, the HUB 26.

### [Sending Example of Send Packet D4]

Next, the following will describe a sending example of the send packet D4. As shown in FIG. 6A, the send packet D4 is composed of Length, [ESC], Character 1, Character 2,..., Character n and [Enter]. These Length, [ESC], Character 1, Character 2,..., Character n and [Enter] respectively have an amount of data of one byte.

The Length indicates data length (a size of data) of the send packet D4. For example, if the size of data of the send packet D4 is 8 bytes, value [8] is input on the keyboard 33. For example, the size of data up to 127 bytes at most may be input.

The [ESC] indicates a start of sending the send packet D4. The [ESC] is a start character of [0x1B] of Escape key code.

Into the Character 1, Character 2,..., and Character n, a menu command main body is input. For example, in a case of the menu command of [ESC]JG, it is input by pushing down [J] key and [G] key of the keyboard 33.

The [ENTER] indicates a finish of sending the send packet D4. The [ENTER] is an end character of [0x0D] of ENTER key code.

FIG. 6B is a configuration example of the send packet D4 of the menu command of [ESC]U2. As shown in FIG. 6B, value [5] is input into the Length. This is because the data length of the send packet D4 is 5 bytes. The [ESC] is then input and [U] and [2] are input corresponding to the Character 1 and the Character 2. The [ENTER] is finally input and the send packet D4 is sent from the HID host 20 to the code scanner 31. The code scanner 31 then receives the menu command of [ESC]U2 and the setting of changing the interface of the code scanner 31 to RS232C is performed.

FIG. 6C is a sending example of another menu command and is a configuration example of the send packet D4 of the menu command of [ESC]Z. As shown in FIG. 6C, value [4] is input into the Length. This is because the data length of the send packet D4 is 4 bytes. The [ESC] is then input and [Z] is input corresponding to the Character 1. The [ENTER] is finally input and the send packet D4 is sent from the HID host 20 to the code scanner 31. The code scanner 31 then operates to read the code.

Thus, by the data-sending method according to this embodiment, the send packet D4 including the menu command of the code scanner 31, which is a collection of items of send data D3, is created in place of the send data D3, and the created send packet D4 is sent from the HID host 20 to the code scanner 31. This enables the send packet D4 sent from the HID host 20 to set a desired menu command in the code scanner 31 even if the interface is USB-HID.

It is to be noted that although the first and second embodiments have been described in which the send data D3 and the send packet D4 are created by inputting characters with the keyboard 33, this invention is not limited thereto: The send data D3 and the send packet D4 may be created by any programs. This enables a data-sending speed from the HID host 20 to the USB devices to be improved (In fact, it was improved from the above-mentioned 0.2 bps up to 100 bps). Further, it is capable of performing a start-stop on the data sending from the HID host 20 to any of the USB devices 30, which allows an optimal speed thereof to be calculated.

Further, this invention is not limited to the USB-HID: It is applicable to an interface (for example, keyboard wedge or the like) which is a one-way data communication type that sends the data from any of the input devices to PC and can send only the status information from PC to the input devices.

### DESCRIPTION OF CODES

10...PC; 20...HID Host; 21...Application; 22...HID Class Driver; 23...HUB Class Driver; 24...USB Driver; 25...Host Controller Driver; 26...HUB; 30...USB Devices; 31...Code Scanner; 32...Handy Terminal; 33...Keyboard; 34...Mouse; D1...Input Data; D2...Status Information; D3...Send Data; and D4...Send Packet.

## Claims

1. A data-sending method in which status information indicating a status of a host is sent from the host to an input device, **characterized in that** the host creates send data based on plural pieces of the status information and sends to the input device the created send data.

2. The data-sending method according to Claim 1 **characterized in that** the status information is information containing ON or OFF status of Caps Lock, Num Lock and Scroll Lock, and
the send data is created by a combination of ON or OFF status of the Caps Lock key, the Num Lock key and the Scroll Lock key.

3. The data-sending method according to Claim 1 or 2 **characterized in that** as the input device, information input device having Caps Lock key, Num Lock key and Scroll Lock key is provided, and
the send data is created by pushing down the Caps Lock key, the Num Lock key and the Scroll Lock key at a predetermined interval and in predetermined order.

4. The data-sending method according to any one of Claims 1 through 3 **characterized in that** the send data is created as a send packet including a menu command for setting the input device.

5. The data-sending method according to any one of Claims 1 through 4 **characterized in that** the host and the input device are connected to each other through an interface of USB-HID.

6. The data-sending method according to any one of Claims 1 through 5 **characterized in that** the input device is a keyboard, a mouse, a handy terminal or a code scanner.

7. The data-sending method according to Claim 3 **characterized in that** the input device is a handy terminal or a code scanner, and
the information input device is a keyboard having the Caps Lock key, the Num Lock key and the Scroll Lock key.

8. A data-sending system in which status information indicating a status of a host is sent from the host to an input device, **characterized in that** the host creates send data based on plural pieces of the status information and sends to the input device the created send data.
